# EUROPEAN PATENT APPLICATION

(11) **EP 3 009 258 A1**
(43) Date of publication of application: **20.04.2016**
(21) Application number: 15190024.8
(22) Date of filing: 15.10.2015
(51) Int. Cl.: B29C 67/00

(54) **DRIVE DEVICE FOR A FILAMENT IN A 3D PRINTER**

(30) Priority: 16.10.2014 NL 1041001
(71) Applicant: Leapfrog B.V., 2408 AW Alphen aan de Rijn (NL)
(72) Inventor: ENACHE, Eugen Horatiu, Cluj-Napoca (RO)
(74) Representative: Patentwerk B.V.

(57) **Abstract**

The invention relates to a drive device to be fitted in a 3D printer for driving a filament in its longitudinal direction which is to be printed to form a workpiece in the 3D printer under the control of a control element, comprising a frame, a drive wheel placed on a drive shaft mounted in the frame, a guide wheel placed on a guide shaft mounted in the frame, guide means connected to the frame for passing the filament between the wheels, and an electric motor for driving the drive shaft, in which the frame comprises an auxiliary frame in which one of the shafts is mounted, and in that the position of the auxiliary frame with respect to the frame is adjustable. The auxiliary frame is preferably coupled to the frame by means of an adjustment screw.

Furthermore, the adjustment screw is coupled to the frame by means of a screw thread and a compression spring is placed between the adjustment screw and the auxiliary frame.

## Description

The invention relates to a drive device for the filament in a 3D printer. With a 3D printer, a filament of meltable material is supplied to a printing head which is provided with a heating element and which moves across the workpiece, in each case applying a thin layer of the molten material onto the workpiece.

From the prior art, a drive device is known for driving a filament to be printed to form a workpiece in the 3D printer in the longitudinal direction thereof, comprising: a frame, a drive wheel placed on a drive shaft mounted in the frame, a guide wheel placed on a guide shaft mounted in the frame, guide means connected to the frame for passing the filament between the wheels and an electric motor for driving the drive shaft.

With this drive device, the two shafts are rigidly mounted in the frame of the drive device, so that the distance between the drive wheel and the guide wheel is constant. The filament is therefore not always driven in a very constant manner, since the thickness and the resilience of the filament vary and the wheels wear. Thus, there are occasions when the filament slips with respect to the drive wheel and the supply of the filament is halted. As a consequence, the filament in the heating element is heated excessively and material is missing for the printing, resulting in a printed workpiece of suboptimal quality.

It is the object of the invention to provide such a drive device, in which these drawbacks are prevented.

This object is achieved by a device of the abovementioned kind, in which the frame comprises an auxiliary frame in which one of the shafts is mounted and in which the position of the auxiliary frame with respect to the frame is adjustable, and is preferably adjustable by linear displacement.

As a result of these measures, the distance between the wheels can be adjusted in such a manner that it can be adapted to the thickness of the filament, and the wear of the wheels.

According to a preferred embodiment, the guide shaft is mounted in the auxiliary frame. As a result thereof, it is possible to mount the drive shaft in the frame in a fixed manner, so that this shaft can easily be driven.

In order to be able to change the position of the wheels easily, it is preferable if the auxiliary frame is coupled to the frame by means of an adjustment screw. The adjustment can then be effected by turning the adjustment screw.

In order to ensure that the filament is driven in an efficient manner, it is preferred if the wheels are forced against each other under spring force. According to a preferred embodiment, the adjustment screw is then also coupled to the frame by means of a screw thread and a compression spring is placed between the adjustment screw and the auxiliary frame, in which the adjustment screw and the auxiliary frame preferably being coaxially displaceable.

According to an embodiment which is constructionally advantageous, the adjustment screw is in the form of a bush, the outside of which is provided with a screw thread by means of which the adjustment screw is screwed into an internally threaded hole provided in the frame, and the spring which is placed in the inside of the bush-shaped adjustment screw is a coil spring.

The construction becomes particularly compact if the auxiliary frame is in the form of a pin which extends through the coil spring and which is provided with a plate at its internal end on which the coil spring rests and with a forked part in which the guide shaft is mounted. It should be noted in this case that it is attractive to make the drive device as compact as possible, in particular if it is mounted on the moving printing head.

In some situations, for example when a new filament is passed through the drive device, it is attractive to be able to increase the distance between the drive wheel and the guide wheel, since it is easier to pass the tip of a filament between both wheels if the distance is greater. To this end, a further embodiment provides the measure that the pin extends outwards through an opening which is provided in the end wall of the bush and that the external end of the pin is provided with a pulling knob. By pulling on the pulling knob, the distance between the wheels can temporarily be increased. Furthermore, this embodiment has the advantage that, after the pulling knob is released, the guide wheel returns to its initial position.

In order to prevent slipping between the drive wheel and the filament, it is preferred if the tangential surface of the drive wheel is provided with ridges which extend parallel to the shaft.

In order to hold the filament securely between the drive wheel and the guide wheel, it is attractive if the tangential surface of the drive wheel is provided with a groove. Furthermore, the groove increases the contact surface between the drive wheel and the filament, which prevents slipping still further.

Particularly when inserting a new filament, it is easy to turn the drive wheel by means of a hand in order to be able to execute the insertion procedure correctly. Even in case of disruptions, it may be of interest to be able to turn the drive wheel. To this end, an embodiment provides the measure that the drive shaft extends beyond the frame and that the part of the drive shaft extending beyond the frame is provided with a handwheel.

Inserting a new filament piece is facilitated further if the guide means comprise swivels which are arranged upstream and downstream, respectively, of the nip between the drive wheel and the guide wheel in the frame and which have a conical through-opening which widens towards the interior. In particular, the conical opening situated downstream of the wheels is significant in this case.

In order to be able to adjust the size of the conical openings, for example when using filaments of different thickness, it is preferable if the swivels are releasably attached to the frame by means of a screw thread.

The construction is facilitated further if the end of the drive shaft facing away from the handwheel is coupled with an electric motor mounted on the frame. In addition, this offers the possibility of rendering replacement of the electric motor easy.

In order to be able to use the drive device in different situations, it is preferred if the frame is symmetrical with respect to the centre plane which extends at right angles to the shafts.

With certain kinds of 3D printers, the drive device is positioned on the printing head. This has the advantage that the distance between the drive device and the heating element positioned in the printing head is short, so that the supply of the filament is controlled directly. This embodiment provides a 3D printer, provided with a drive device according to one of the preceding claims, in which the drive device is mounted directly on the printing head of the 3D printer.

In order to keep the mass of the printing head small, an alternative embodiment provides a 3D printer, provided with a drive device as disclosed above, in which the drive device is mounted on a fixed part of the printer and the drive device is connected to the printing head by means of the hollow part of a Bowden cable.

Next, the present invention will be explained with reference to the following drawings, in which:
Fig. 1: shows a diagrammatic cross section of a 3D printer according to a first configuration;
Fig. 2: shows a diagrammatic cross section of a 3D printer according to a second configuration;
Fig. 3: shows a diagrammatic perspective view of a drive device in cross section;
Fig. 4: shows a diagrammatic perspective view of the drive device illustrated in Fig. 3; and
Fig. 5: shows a diagrammatic perspective view of the drive device illustrated in Figs 3 and 4 from another direction.

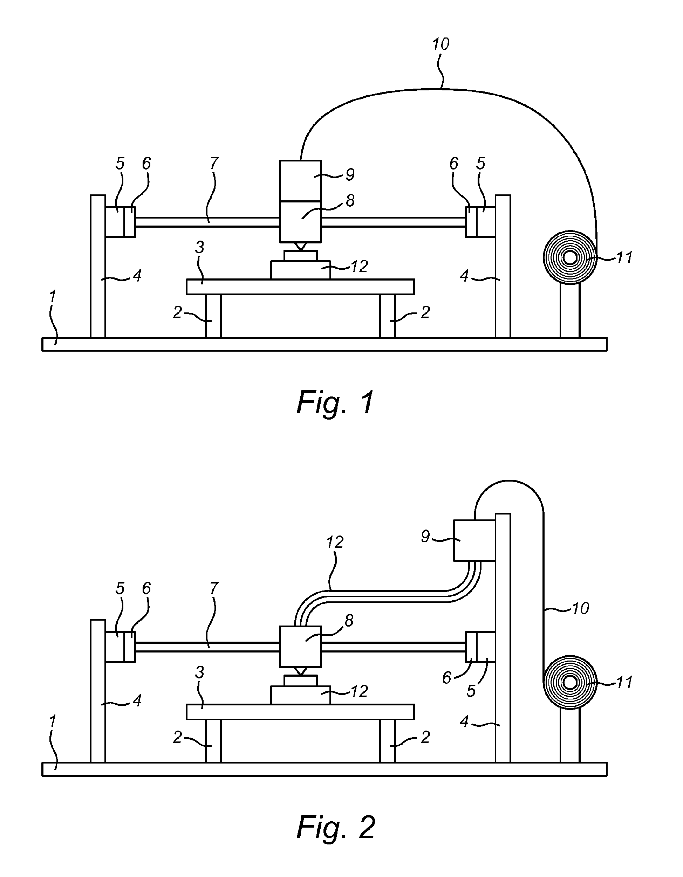

The 3D printer illustrated in Fig. 1 comprises a bottom plate 1 to which a work platform 3 is attached by means of spindles 2 or other linear drive elements and the height of which is determined by the spindles 2. The printer is furthermore provided with a frame 4 to which rails 5 are attached which extend at right angles to the plane of the drawing. A carriage 6 can be moved along each of these rails 5 simultaneously and both carriages 6 are connected by a rail 7 over which a printing head 8 can be moved. On the printing head 8, a drive device 9 is arranged for the filament 10 which is unrolled from a reel 11. Such a printer is configured to produce a workpiece 12 under control of a control element (not shown).

The printer illustrated diagrammatically in Fig. 2 largely corresponds with the printer illustrated in Fig. 1, except that the drive device 9 for the filament 10 is not mounted on the printing head 8, but on the frame 4. The drive device 9 is connected to the printing head 8 by means of a flexible tube 13. The filament 10 is moved towards the printing head 8 by the drive device 9 through the flexible tube 13.

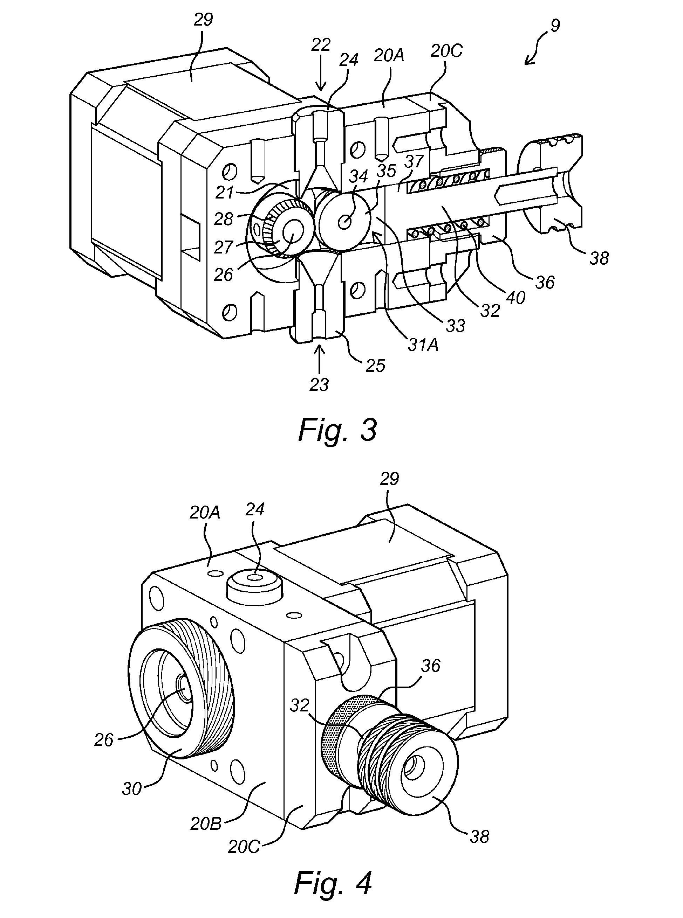

Both types of printer form part of the prior art and the two types of printer have been explained in order to illustrate the fact that the invention, which relates to the drive device of the printing head, can be used with both types of printer. Next, the construction of the drive device 9 will be explained with reference to Figs 3-6.

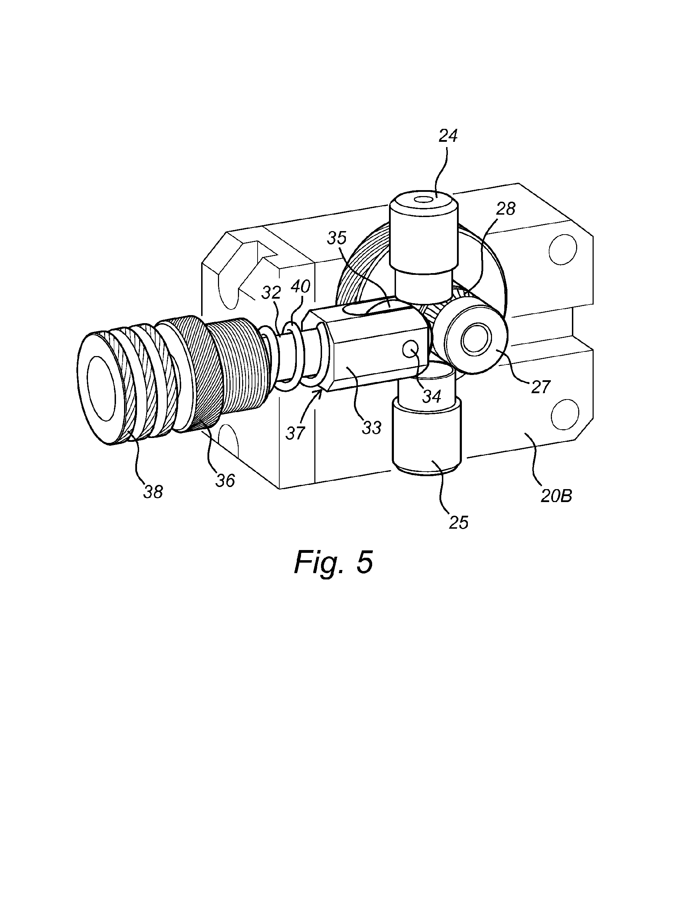

Fig. 3 shows a part of a drive device 9, comprising a moulded piece 20A which is made, for example, of aluminium. The drive device 9 is also provided with a mimor-symmetrically formed moulded piece 20B, which is shown in Fig. 5. Both moulded pieces 20A,B are provided with screw holes in order to connect the moulded pieces to each other and to connect components to the moulded pieces. Furthermore, this figure shows a third moulded piece 20C which is mounted on the side faces of the moulded pieces 20A,B. The moulded pieces 20A, B, C together form a frame 20. The frame 20 is shown in its entirety in Fig. 4.

In the moulded pieces 20A,B is a space 21 is provided which is connected to the environment by means of opposite openings 22, 23. A swivel 24, 25 which has a small opening for passing through the filament 10 is screwed into both openings 22, 23. The openings provided in the swivels 24, 25 widen conically towards the space 21. As a result of the screw connection between the swivels 24, 25 and the opening 22, 23, it is possible to unscrew the swivels and replace them with swivels of a different size, for example for driving a filament 10 of a different diameter.

A drive shaft 26 extends through both moulded pieces 20 and through the space 21. In the space, a drive wheel 27 is provided on the drive shaft 26. The drive wheel 27 is provided with a groove 28 which extends along its tangential surface and which, in addition, is provided with ridges. An electric motor 29 is screwed onto the moulded piece 20A and the drive shaft 26 is driven by the electric motor. The part of the drive shaft 26 protruding on the side of the moulded piece 20B is provided with a handwheel 30 by means of which it is possible to rotate the drive shaft independently from the electric motor.

As can also be seen in Fig. 5, both moulded pieces 20A,B are provided with a deep groove 31A and 31B , respectively, which together form an opening 31. The opening 31 also extends through the third moulded piece 20C as far as the environment. The axis of the opening 31 extends at right angles to the longitudinal direction of the drive shaft and to the line between the swivels 24, 25. In this opening 31, a pin 32 is fitted which is movable in the longitudinal direction of the opening and acts as an auxiliary frame. The pin is provided on its inner side with a forked part 33 in which a guide shaft 34 is mounted on which a guide wheel 35 is placed. The guide wheel 35 is situated opposite the drive wheel 27 and the filament 10 to be driven is passed between both wheels 27, 35.

The part of the opening 31 in the third moulded piece 20C is provided with an internal screw thread and the opening 31 is closed off by a bush 36 which is screwed into the opening 31. The forked part 33 of the pin 32 is provided with a plate 37 and a coil spring 40 which is placed between the plate 37 and the inner surface of the end wall of the bush 36 and which forces the pin 32 inwards, thus forcing the guide wheel 35 against the filament 10. By screwing the bush 36 to a greater or lesser degree up to the third moulded piece 20C, the tension generated by the coil spring 40 and thus the clamping force between the guide wheel 35 and the drive wheel 27 can be adjusted. The pin 32 extends through an opening provided in the end wall of the bush 36 outwards and a pulling knob 38 is attached to the protruding part of the pin 32. This makes it possible to temporarily remove the guide wheel 35 from the drive wheel 27 in order to facilitate the introduction of a new filament 10.

As is explained by means of Figs 1 and 2, the drive device 9 according to the invention can be used with 3D printers in which the drive device is mounted on the printing head or forms part of the printing head, but also with 3D printers in which the drive device is connected to the frame of the printer and the driven filament is passed through a hose to the printing head.

In the drive device, the filament 10 is passed through the upstream swivel 24, between the drive wheel 27 and the guide wheel 35 and through the downstream swivel 25. By turning the bush 36, the force with which the guide wheel pushes the filament 10 against the drive wheel can be adjusted. Furthermore, the pulling knob 38 makes it possible to increase the distance between the drive wheel 27 and the guide wheel 35 temporarily, for example during the introduction of a new filament 10. When the pulling knob 38 is released, the guide wheel 35 is again pressed against the filament 10 with the same force as before.

It will be clear that, within the scope of the claims, variations on the embodiments explained above fall within the invention and that measures in the various embodiments can be combined.

## Claims

1. Drive device to be fitted in a 3D printer for driving a filament in its longitudinal direction which is to be printed to form a workpiece in the 3D printer under the control of a control element, comprising:
- a frame;
- a drive wheel placed on a drive shaft mounted in the frame;
- a guide wheel placed on a guide shaft mounted in the frame;
- guide means connected to the frame for passing the filament between the wheels; and
- an electric motor for driving the drive shaft,
**characterized in that** the frame comprises an auxiliary frame in which one of the shafts is mounted, and **in that** the position of the auxiliary frame with respect to the frame is adjustable, and is preferably adjustable by linear displacement.

2. Drive device according to Claim 1, **characterized in that** the guide shaft is mounted in the auxiliary frame.

3. Drive device according to Claim 1 or 2, **characterized in that** the auxiliary frame is coupled to the frame by means of an adjustment screw.

4. Drive device according to Claim 3, **characterized in that** the adjustment screw is coupled to the frame by means of a screw thread, and **in that** a compression spring is placed between the adjustment screw and the auxiliary frame, in which the adjustment screw and the auxiliary frame are preferably coaxially displaceable.

5. Drive device according to Claim 4, **characterized in that** the adjustment screw is in the form of a bush, the outside of which is provided with a screw thread by means of which the adjustment screw is screwed into an internally threaded hole provided in the frame, and **in that** the spring which is placed in the inside of the bush-shaped adjustment screw is a coil spring.

6. Drive device according to Claim 5, **characterized in that** the auxiliary frame is in the form of a pin which extends through the coil spring and which is provided with a plate at its internal end on which the coil spring rests and with a forked part in which the guide shaft is mounted.

7. Drive device according to Claim 6, **characterized in that** the pin extends outwards through an opening which is provided in the end wall of the bush, and **in that** the external end of the pin is provided with a pulling knob.

8. Drive device according to one of the preceding claims, **characterized in that** the tangential surface of the drive wheel is provided with ridges which extend parallel to the shaft.

9. Drive device according to one of the preceding claims, **characterized in that** the tangential surface of the drive wheel is provided with a groove.

10. Drive device according to one of the preceding claims, **characterized in that** the drive shaft extends beyond the frame, and **in that** the part of the drive shaft extending beyond the frame is provided with a handwheel.

11. Drive device according to one of the preceding claims, **characterized in that** the guide means comprise swivels which are arranged upstream and downstream, respectively, of the nip between the drive wheel and the guide wheel in the frame and which have a conical through-opening which widens towards the interior.

12. Drive device according to Claim 11, **characterized in that** the swivels are releasably attached to the frame by means of a screw thread.

13. Drive device according to Claim 10, **characterized in that** the end of the drive shaft facing away from the handwheel is coupled with an electric motor mounted on the frame.

14. Drive device according to one of the preceding claims, **characterized in that** the frame is symmetrical with respect to the centre plane which extends at right angles to the shafts.

15. 3D printer, provided with a drive device according to one of the preceding claims, **characterized in that** the drive device is mounted directly on the printing head of the 3D printer.

16. 3D printer, provided with a drive device according to one of Claims 1-14, **characterized in that** the drive device is mounted on a fixed part of the printer, and **in that** the drive device is connected to the printing head by means of the hollow part of a Bowden cable.
